# EUROPEAN PATENT APPLICATION

(11) **EP 4 835 773 A1**
(43) Date of publication of application: **04.11.2026**
(21) Application number: 24912085.8
(22) Date of filing: 15.11.2024
(51) Int. Cl.: G06Q 10/20, B60S 5/00

(54) **METHOD, NON-TRANSITORY COMPUTER-READABLE MEDIUM, AND INFORMATION PROCESSING DEVICE**

(30) Priority: 28.12.2023 JP 2023223334
(71) Applicant: TOYOTA JIDOSHA KABUSHIKI KAISHA, Toyota-shi, Aichi 471-8571 (JP)
(72) Inventor: TATSUMOTO, Yuki, Toyota-shi, Aichi 471-8571 (JP); YAMANE, Josuke, Toyota-shi, Aichi 471-8571 (JP); NOGAMI, Hirotaka, Toyota-shi, Aichi 471-8571 (JP); NISHIMURA, Kazuya, Toyota-shi, Aichi 471-8571 (JP); FUKUNAGA, Takumi, Toyota-shi, Aichi 471-8571 (JP)
(74) Representative: D Young & Co LLP
(86) International application number: PCT/JP2024/040729
(87) International publication number: WO 2025/142192

(57) **Abstract**

A method performed by an information processing apparatus 20 includes, upon detecting occurrence of a predetermined trigger related to a vehicle 10, displaying an image of the engine compartment of the vehicle 10, identifying a consumable to be replenished for the vehicle 10, and displaying assistance information including the position, in the engine compartment, of a filler port corresponding to the identified consumable.

## Description

### CROSS-REFERENCE TO RELATED APPLICATION

This application claims priority to Japanese Patent Application No. 2023-223334 filed on December 28, 2023, the entire contents of which are incorporated herein by reference.

### TECHNICAL FIELD

The present disclosure relates to a method, a non-transitory computer readable medium, and an information processing apparatus.

### BACKGROUND

Conventionally, in vehicles such as automobiles, consumables, for example, washer fluid and the like are replenished from filler ports provided in the vehicles' engine compartments. For example, Patent Literature (PTL) 1 discloses an information notification system that displays a usage amount of washer fluid and replacement timing thereof.

### CITATION LIST

### Patent Literature

PTL 1: JP 2016-002929 A

### SUMMARY

### (Technical Problem)

Generally, engine compartments of vehicles are equipped with dedicated filler ports corresponding to respective consumables including, but not limited to, washer fluid, brake fluid, battery fluid, and the like. Accordingly, for example, when a user is unfamiliar with the maintenance of a vehicle and mistakenly replenishes a consumable from a wrong refill port, the vehicle is likely to fail.

In view of such a circumstance, the present disclosure aims to reduce the likelihood of vehicle failure during replenishment of consumables for a vehicle.

### (Solution to Problem)

A method according to an embodiment of the present disclosure is a method performed by an information processing apparatus, the method including:
upon detecting occurrence of a predetermined trigger related to a vehicle, displaying an image of the engine compartment of the vehicle;
identifying a consumable to be replenished for the vehicle; and
displaying assistance information including the position of a filler port in the engine compartment, the filler port corresponding to the identified consumable.

A non-transitory computer readable medium according to an embodiment of the present disclosure stores a program configured to cause a computer to execute operations, the operations including:
upon detecting occurrence of a predetermined trigger related to a vehicle, displaying an image of the engine compartment of the vehicle;
identifying a consumable to be replenished for the vehicle; and
displaying assistance information including the position of a filler port in the engine compartment, the filler port corresponding to the identified consumable.

An information processing apparatus according to an embodiment of the present disclosure is an information processing apparatus including a controller configured to:
upon detecting occurrence of a predetermined trigger related to a vehicle, display, on a display, an image of the engine compartment of the vehicle;
identify a consumable to be replenished for the vehicle; and
display, on the display, assistance information including the position of a filler port in the engine compartment, the filler port corresponding to the identified consumable.

### (Advantageous Effect)

According to an embodiment of the present disclosure, the likelihood of vehicle failure during replenishment of consumables for a vehicle is reduced.

### BRIEF DESCRIPTION OF THE DRAWINGS

In the accompanying drawings:
FIG. 1 is a block diagram illustrating a schematic configuration of a system according to an embodiment of the present disclosure;
FIG. 2 is a block diagram illustrating a schematic configuration of a vehicle;
FIG. 3 is a block diagram illustrating a schematic configuration of an information processing apparatus;
FIG. 4 is a block diagram illustrating a schematic configuration of a server; and
FIG. 5 is a flowchart illustrating operations of the information processing apparatus.

### DETAILED DESCRIPTION

Hereinafter, an embodiment of the present disclosure will be described.

### (Outline of Embodiment)

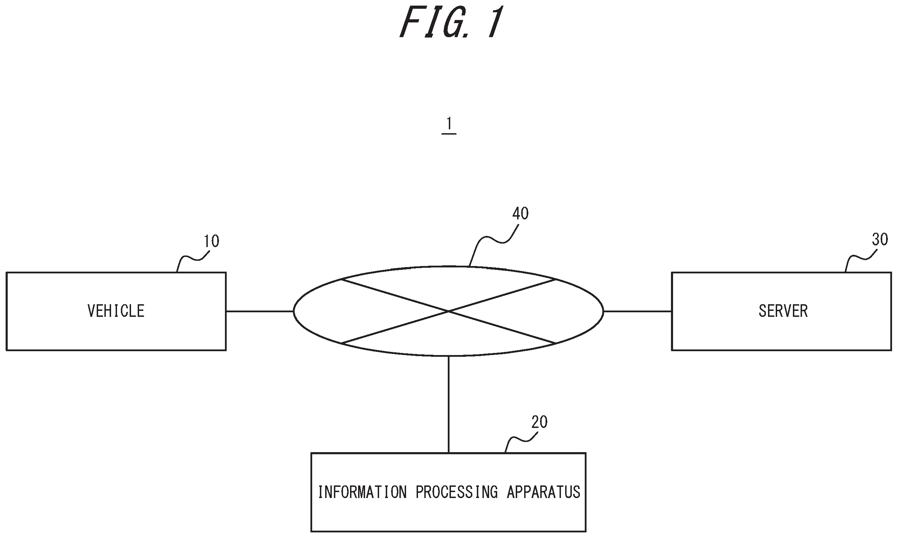

An outline of a system 1 according to the embodiment of the present disclosure will be described with reference to FIG. 1. The system 1 includes a vehicle 10, an information processing apparatus 20, and a server 30. The server 30 can communicate with each of the vehicle 10 and the information processing apparatus 20 via a network 40, such as the Internet.

The vehicle 10 is, for example, a gasoline automobile, but is not limited thereto, and may be any automobile that has people on board, such as a battery electric vehicle (BEV), a hybrid electric vehicle (HEV), a plug-in hybrid electric vehicle (PHEV), or a fuel cell electric vehicle (FCEV). In the present embodiment, dedicated filler ports corresponding to respective consumables such as brake fluid and battery fluid are provided in the engine compartment of the vehicle 10.

The information processing apparatus 20 is a computer such as a mobile phone or a smartphone. In the present embodiment, the information processing apparatus 20 is used by a user of the vehicle 10.

The server 30 includes one computer or multiple computers that can communicate with each other. In the present embodiment, the vehicle 10 and the information processing apparatus 20 can communicate with each other via the server 30. However, the vehicle 10 and the information processing apparatus 20 may communicate directly without intervention of the server 30.

An outline of the present embodiment is described here, and details thereof will be described later. The information processing apparatus 20 according to the present embodiment displays an image of the engine compartment of the vehicle 10, upon detecting occurrence of a predetermined trigger related to the vehicle 10. The information processing apparatus 20 identifies a consumable to be replenished for the vehicle 10. Then, the information processing apparatus 20 displays assistance information including the position, in the engine compartment, of a filler port corresponding to the identified consumable.

Thus, according to the present embodiment, in response to occurrence of a predetermined trigger related to the vehicle 10, an image of the engine compartment of the vehicle 10 and assistance information including, for example, the position of a filler port corresponding to a consumable to be replenished for the vehicle 10 are displayed. Therefore, a user who wishes to replenish washer fluid for the vehicle 10, even when the user is unfamiliar with the maintenance of the vehicle 10, can perform a replenishment operation while referring to the image of the engine compartment and the assistance information displayed on the information processing apparatus 20, thereby reducing the likelihood of mistakenly replenishing washer fluid from a wrong filler port. Therefore, the likelihood of failure of the vehicle 10 during replenishment of consumables for the vehicle 10 is reduced.

Next, configurations of the system 1 will be described in detail.

### (Configuration of Vehicle)

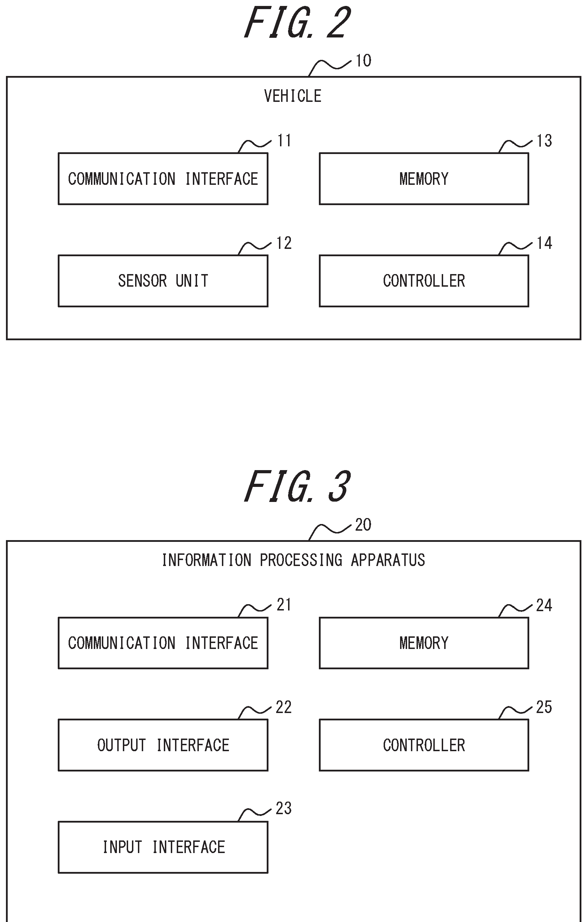

With reference to FIG. 2, components of the vehicle 10 will be described. The vehicle 10 includes a communication interface 11, a sensor unit 12, a memory 13, and a controller 14.

The communication interface 11 includes one or more communication interfaces for connecting to the network 40. The communication interfaces are compliant with mobile communication standards such as the 4th generation (4G) and 5th generation (5G) standards, for example, but are not limited thereto, and may be compliant with any communication standards.

The sensor unit 12 includes one or more sensors that detect the states of the vehicle 10. In the present embodiment, the sensor unit 12 includes an open/close sensor that detects the opening and closing of the hood.

The memory 13 includes one or more memories. The memories are, for example, semiconductor memories, magnetic memories, optical memories, or the like, but are not limited thereto. The memories included in the memory 13 may each function as, for example, a main memory, an auxiliary memory, or a cache memory. The memory 13 stores any information to be used for operations of the vehicle 10. For example, the memory 13 may store a system program, an application program, embedded software, map information, and the like.

The controller 14 includes one or more processors, one or more programmable circuits, one or more dedicated circuits, or a combination of these. The processors are, for example, general purpose processors such as central processing units (CPUs) or graphics processing units (GPUs), or dedicated processors that are dedicated to specific processing, but are not limited thereto. The programmable circuits are field-programmable gate arrays (FPGAs), for example, but are not limited thereto. The dedicated circuits are application specific integrated circuits (ASICs), for example, but are not limited thereto. The controller 14 controls operations of the entire vehicle 10.

### (Configuration of Information Processing Apparatus)

As illustrated in FIG. 3, the information processing apparatus 20 includes a communication interface 21, an output interface 22, an input interface 23, a memory 24, and a controller 25.

The communication interface 21 includes one or more communication interfaces for connecting to the network 40. The communication interfaces may be compliant with, for example, mobile communication standards, wired local area network (LAN) standards, or wireless LAN standards, but are not limited thereto, and may be compliant with any appropriate communication standards.

The output interface 22 includes one or more output devices for outputting information. The output devices are, for example, a display for outputting information as video, a speaker for outputting information as audio, or the like, but are not limited thereto. Alternatively, the output interface 22 may include an interface for connecting to an external output device.

The input interface 23 includes one or more input devices for detecting input operations by the user. The input devices are, for example, physical keys, capacitive keys, a mouse, a touch panel, a touch screen integrally provided with a display of the output interface 22, a camera, a microphone, or the like, but are not limited thereto. Alternatively, the input interface 23 may include an interface for connecting to an external input device.

The memory 24 includes one or more memories. The memories included in the memory 24 may each function as, for example, a main memory, an auxiliary memory, or a cache memory. The memory 24 stores any information to be used for operations of the information processing apparatus 20. For example, the memory 24 may store a system program, an application program, and vehicle information, and the like. The vehicle information may include, for example, an image of the engine compartment of the vehicle 10 and the positions of filler ports for consumables in the engine compartment, but is not limited thereto, and may include any information related to the vehicle 10.

The controller 25 includes one or more processors, one or more programmable circuits, one or more dedicated circuits, or a combination of these. The controller 25 controls operations of the entire information processing apparatus 20.

### (Configuration of Server)

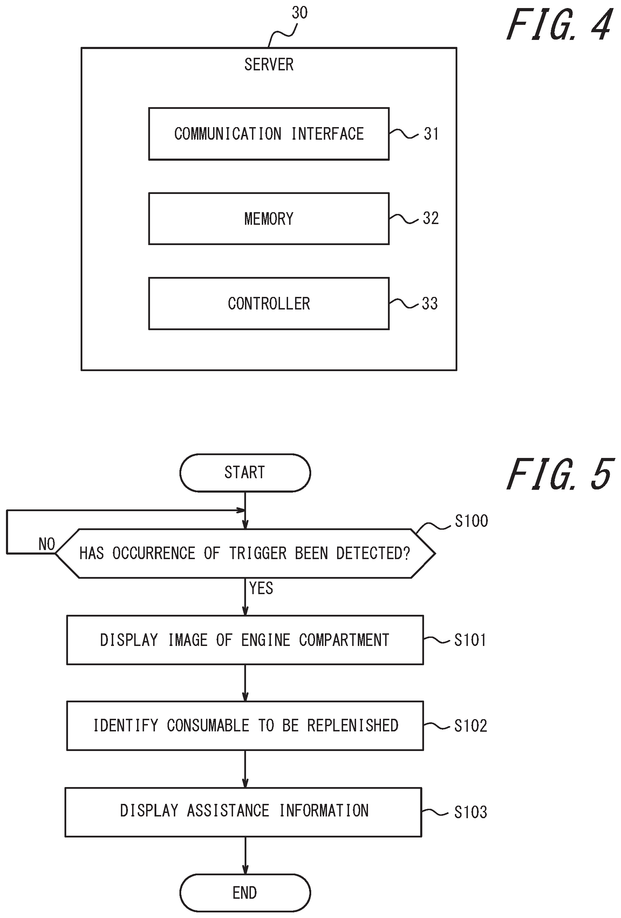

With reference to FIG. 4, components provided in the server 30 will be described. The server 30 includes a communication interface 31, a memory 32, and a controller 33.

The communication interface 31 includes one or more communication interfaces for connecting to the network 40. The communication interfaces are compliant with, for example, wired LAN standards or wireless LAN standards, but are not limited thereto, and may be compliant with any communication standards.

The memory 32 includes one or more memories. The memories included in the memory 32 may each function as, for example, a main memory, an auxiliary memory, or a cache memory. The memory 32 stores any information to be used for operations of the server 30. For example, the memory 32 may store a system program, an application program, embedded software, a database, and the like.

The controller 33 includes one or more processors, one or more programmable circuits, one or more dedicated circuits, or a combination of these. The controller 33 controls operations of the entire server 30.

### (Operations of Information Processing Apparatus)

With reference to FIG. 5, operations of the information processing apparatus 20 will be described.

S100: The controller 25 of the information processing apparatus 20 determines whether occurrence of a predetermined trigger related to the vehicle 10 has been detected. When the occurrence of the trigger is determined to have been detected (S100-Yes), the process proceeds to S101. On the other hand, when the occurrence of the trigger is determined not to have been detected (S100-No), the process repeats S100.

In the present embodiment, the "predetermined trigger" is that the hood of the vehicle 10 is opened. Specifically, when the user opens the hood to replenish a consumable such as washer fluid for the vehicle 10, the controller 14 of the vehicle 10 detects, using the open/close sensor of the sensor unit 12, that the hood has been opened. The controller 14 transmits, to the information processing apparatus 20 via the communication interface 11 and the server 30, a notification indicating the occurrence of the predetermined trigger (that is, a notification indicating that the hood has been opened). Then, upon receiving the notification via the communication interface 21, the controller 25 of the information processing apparatus 20 determines that the occurrence of the predetermined trigger has been detected.

S101: Upon determining that the occurrence of the trigger has been detected in S100 (S100-Yes), the controller 25 displays an image of the engine compartment of the vehicle 10 on a display of the output interface 22.

Specifically, the controller 25 acquires the image of the engine compartment from vehicle information stored in the memory 24, and displays the image on the display of the output interface 22. The image of the engine compartment may be, for example, an image capturing the engine compartment or a schematic diagram of the engine compartment.

S102: The controller 25 identifies a consumable to be replenished for the vehicle 10.

In the present embodiment, the controller 25 identifies a consumable to be replenished for the vehicle 10 from among five types of consumables of washer fluid, brake fluid, battery fluid, coolant, and engine oil. However, the consumable to be replenished for the vehicle 10 may be identified from any of six or more types of consumables, not limited to the five types of consumables.

Any method can be adopted for identifying the consumable to be replenished for the vehicle 10. For example, the controller 25 may accept, via the input interface 23, a user input to select or specify the consumable to be replenished for the vehicle 10.

For example, the controller 25 may acquire, in response to a user operation, an image of a consumable to be replenished for the vehicle 10, and identify the consumable through image recognition from that image. Specifically, when the user captures the image of the consumable to be replenished for the vehicle 10 using a camera of the input interface 23 of the information processing apparatus 20, the controller 25 identifies the consumable through image recognition from the captured image.

S103: The controller 25 displays, on the display of the output interface 22, assistance information including the position, in the engine compartment, of a filler port corresponding to the consumable identified in S102.

The "assistance information" is not limited to the position of the filler port corresponding to the identified consumable, and may further include any information regarding that consumable. For example, the "assistance information" may further include a replenishment procedure for the identified consumable.

As described above, the information processing apparatus 20 according to the present embodiment displays an image of the engine compartment of the vehicle 10, upon detecting occurrence of a predetermined trigger related to the vehicle 10. The information processing apparatus 20 identifies a consumable to be replenished for the vehicle 10. Then, the information processing apparatus 20 displays assistance information including the position, in the engine compartment, of a filler port corresponding to the identified consumable.

According to such a configuration, in response to occurrence of a predetermined trigger related to the vehicle 10, an image of the engine compartment of the vehicle 10 and assistance information including, for example, the position of a filler port corresponding to a consumable to be replenished for the vehicle 10 are displayed. Therefore, a user who wishes to replenish washer fluid for the vehicle 10, even when the user is unfamiliar with the maintenance of the vehicle 10, can perform a replenishment operation while referring to the image of the engine compartment and the assistance information displayed on the information processing apparatus 20, thereby reducing the likelihood of mistakenly replenishing washer fluid from a wrong filler port. Therefore, the likelihood of failure of the vehicle 10 during replenishment of consumables for the vehicle 10 is reduced.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like contained in each component, each step, or the like can be rearranged without logical inconsistency, and a plurality of components, steps, or the like can be combined into one or divided.

For example, an embodiment in which the configuration and operations of the information processing apparatus 20 in the above embodiment are distributed to multiple computers capable of communicating with each other can be implemented. An embodiment in which an in-vehicle device (for example, a navigation device or the like) mounted on the vehicle 10 is used as the information processing apparatus 20 described above can also be implemented.

For example, an embodiment in which a general purpose computer functions as the information processing apparatus 20 according to the above embodiment can also be implemented. Specifically, a program in which processes for realizing the functions of the information processing apparatus 20 according to the above embodiment are written may be stored in a memory of the general purpose computer, and the program may be read and executed by a processor. Accordingly, the present disclosure can also be implemented as a program executable by a processor, or a non-transitory computer readable medium storing the program.

In the above embodiment, the sensor unit 12 of the vehicle 10 may further include a sensor that detects the remaining amounts of consumables, such as washer fluid, in the vehicle 10. In such a case, when a consumable whose remaining amount is less than a predetermined threshold is detected, the controller 14 of the vehicle 10 may transmit a notification indicating that consumable to the information processing apparatus 20 via the communication interface 11 and the server 30. Upon receiving that notification from the vehicle 10, the controller 25 of the information processing apparatus 20 may display, on the display of the output interface 22, a web page in which the consumable can be purchased (for example, a web page of an electronic commerce site or the like).

In the above embodiment, the "predetermined trigger" is that the hood of the vehicle 10 is opened. However, the "predetermined trigger" is not limited to that example.

For example, the "predetermined trigger" may be a user input indicating the start of an replenishment operation for a consumable for the vehicle 10. The user input may be made to the vehicle 10 or to the information processing apparatus 20. The user input may be detected via an input device such as a physical key, a capacitive key, a touch panel, a touch screen, or a microphone.

Alternatively, the "predetermined trigger" may be the activation of an application program related to the vehicle 10 installed in the information processing apparatus 20. The application program related to the vehicle 10 is an application program that performs a predetermined operation on the vehicle 10, such as remote control or setting changes of the vehicle 10, but is not limited thereto.

Alternatively, the "predetermined trigger" may be that a consumable such as washer fluid has been purchased from a web page of an electronic commerce site, or that delivery of the consumable has been completed. Specifically, the controller 25 of the information processing apparatus 20 may display the web page on the display of the output interface 22, and may determine that occurrence of the "predetermined trigger" has been detected when the user has purchased the consumable. Alternatively, the controller 25 may determine that occurrence of the "predetermined trigger" has been detected, upon receiving a notification indicating the completion of delivery of the consumable purchased by the user (for example, a delivery completion email from a logistics provider).

In the above embodiment, the controller 25 of the information processing apparatus 20 displays the image of the engine compartment on the display of the output interface 22. Here, upon detecting, via the input interface 23, an user operation specifying a part in the engine compartment on the image, the controller 25 may display information regarding the specified part on the display of the output interface 22. For example, when a filler port for washer fluid is specified by the user operation, general information about the washer fluid, a replenishment procedure, precautions, a link to a web page in which the washer fluid can be purchased, or the like may be displayed.

Examples of some embodiments of the present disclosure are described below. However, it should be noted that the embodiments of the present disclosure are not limited to these examples.
[Appendix 1] A method performed by an information processing apparatus, the method comprising:
   upon detecting occurrence of a predetermined trigger related to a vehicle, displaying an image of an engine compartment of the vehicle;
   identifying a consumable to be replenished for the vehicle; and
   displaying assistance information including a position of a filler port in the engine compartment, the filler port corresponding to the identified consumable.
[Appendix 2] The method according to appendix 1, wherein the trigger includes that a hood of the vehicle is opened.
[Appendix 3] The method according to appendix 1 or 2, wherein the assistance information further includes a replenishment procedure of the identified consumable.
[Appendix 4] The method according to any one of appendices 1 to 3, further comprising, upon detecting a user operation that specifies a part in the engine compartment on the image, displaying information regarding the specified part.
[Appendix 5] The method according to any one of appendices 1 to 4, wherein the information processing apparatus is configured to identify washer fluid, brake fluid, battery fluid, coolant, or engine oil as the consumable.
[Appendix 6] The method according to any one of appendices 1 to 5, further comprising acquiring an image of the consumable in response to a user operation,
   wherein the information processing apparatus is configured to identify the consumable from the image.
[Appendix 7] The method according to any one of appendices 1 to 6, further comprising, when a consumable whose remaining amount is less than a threshold is detected in the vehicle, displaying a web page in which the consumable can be purchased.
[Appendix 8] A program configured to cause a computer to execute operations, the operations comprising:
   upon detecting occurrence of a predetermined trigger related to a vehicle, displaying an image of an engine compartment of the vehicle;
   identifying a consumable to be replenished for the vehicle; and
   displaying assistance information including a position of a filler port in the engine compartment, the filler port corresponding to the identified consumable.
[Appendix 9] The program according to appendix 8, wherein the trigger includes that a hood of the vehicle is opened.
[Appendix 10] The program according to appendix 8 or 9, wherein the assistance information further includes a replenishment procedure of the identified consumable.
[Appendix 11] The program according to any one of appendices 8 to 10, wherein the operations further comprise, upon detecting a user operation that specifies a part in the engine compartment on the image, displaying information regarding the specified part.
[Appendix 12] The program according to any one of appendices 8 to 11, wherein the computer is configured to identify washer fluid, brake fluid, battery fluid, coolant, or engine oil as the consumable.
[Appendix 13] The program according to any one of appendices 8 to 12, wherein
   the operations further comprise acquiring an image of the consumable in response to a user operation, and
   the computer is configured to identify the consumable from the image.
[Appendix 14] The program according to any one of appendices 8 to 13, wherein the operations further comprise, when a consumable whose remaining amount is less than a threshold is detected in the vehicle, displaying a web page in which the consumable can be purchased.
[Appendix 15] An information processing apparatus comprising a controller configured to:
   upon detecting occurrence of a predetermined trigger related to a vehicle, display, on a display, an image of an engine compartment of the vehicle;
   identify a consumable to be replenished for the vehicle; and
   display, on the display, assistance information including a position of a filler port in the engine compartment, the filler port corresponding to the identified consumable.
[Appendix 16] The information processing apparatus according to appendix 15, wherein the trigger includes that a hood of the vehicle is opened.
[Appendix 17] The information processing apparatus according to appendix 15 or 16, wherein the assistance information further includes a replenishment procedure of the identified consumable.
[Appendix 18] The information processing apparatus according to any one of appendices 15 to 17, wherein upon detecting a user operation that specifies a part in the engine compartment on the image, the controller is configured to display, on the display, information regarding the specified part.
[Appendix 19] The information processing apparatus according to any one of appendices 15 to 18, wherein the controller is configured to identify washer fluid, brake fluid, battery fluid, coolant, or engine oil as the consumable.
[Appendix 20] The information processing apparatus according to any one of appendices 15 to 19, wherein the controller is configured to:
   acquire an image of the consumable in response to a user operation; and
   identify the consumable from the image.

### REFERENCE SIGNS LIST

- 1: system
- 10: vehicle
- 11: communication interface
- 12: sensor unit
- 13: memory
- 14: controller
- 20: information processing apparatus
- 21: communication interface
- 22: output interface
- 23: input interface
- 24: memory
- 25: controller
- 30: server
- 31: communication interface
- 32: memory
- 33: controller
- 40: network

## Claims

1. A method performed by an information processing apparatus, the method comprising:
upon detecting occurrence of a predetermined trigger related to a vehicle, displaying an image of an engine compartment of the vehicle;
identifying a consumable to be replenished for the vehicle; and
displaying assistance information including a position of a filler port in the engine compartment, the filler port corresponding to the identified consumable.

2. The method according to claim 1, wherein the trigger includes that a hood of the vehicle is opened.

3. The method according to claim 1, wherein the assistance information further includes a replenishment procedure of the identified consumable.

4. The method according to claim 1, further comprising, upon detecting a user operation that specifies a part in the engine compartment on the image, displaying information regarding the specified part.

5. The method according to claim 1, wherein the information processing apparatus is configured to identify washer fluid, brake fluid, battery fluid, coolant, or engine oil as the consumable.

6. The method according to claim 1, further comprising acquiring an image of the consumable in response to a user operation,
wherein the information processing apparatus is configured to identify the consumable from the image.

7. The method according to claim 1, further comprising, when a consumable whose remaining amount is less than a threshold is detected in the vehicle, displaying a web page in which the consumable can be purchased.

8. A non-transitory computer readable medium storing a program configured to cause a computer to execute operations, the operations comprising:
upon detecting occurrence of a predetermined trigger related to a vehicle, displaying an image of an engine compartment of the vehicle;
identifying a consumable to be replenished for the vehicle; and
displaying assistance information including a position of a filler port in the engine compartment, the filler port corresponding to the identified consumable.

9. The non-transitory computer readable medium according to claim 8, wherein the trigger includes that a hood of the vehicle is opened.

10. The non-transitory computer readable medium according to claim 8, wherein the assistance information further includes a replenishment procedure of the identified consumable.

11. The non-transitory computer readable medium according to claim 8, wherein the operations further comprise, upon detecting a user operation that specifies a part in the engine compartment on the image, displaying information regarding the specified part.

12. The non-transitory computer readable medium according to claim 8, wherein the computer is configured to identify washer fluid, brake fluid, battery fluid, coolant, or engine oil as the consumable.

13. The non-transitory computer readable medium according to claim 8, wherein
the operations further comprise acquiring an image of the consumable in response to a user operation, and
the computer is configured to identify the consumable from the image.

14. The non-transitory computer readable medium according to claim 8, wherein the operations further comprise, when a consumable whose remaining amount is less than a threshold is detected in the vehicle, displaying a web page in which the consumable can be purchased.

15. An information processing apparatus comprising a controller configured to:
upon detecting occurrence of a predetermined trigger related to a vehicle, display, on a display, an image of an engine compartment of the vehicle;
identify a consumable to be replenished for the vehicle; and
display, on the display, assistance information including a position of a filler port in the engine compartment, the filler port corresponding to the identified consumable.

16. The information processing apparatus according to claim 15, wherein the trigger includes that a hood of the vehicle is opened.

17. The information processing apparatus according to claim 15, wherein the assistance information further includes a replenishment procedure of the identified consumable.

18. The information processing apparatus according to claim 15, wherein upon detecting a user operation that specifies a part in the engine compartment on the image, the controller is configured to display, on the display, information regarding the specified part.

19. The information processing apparatus according to claim 15, wherein the controller is configured to identify washer fluid, brake fluid, battery fluid, coolant, or engine oil as the consumable.

20. The information processing apparatus according to claim 15, wherein the controller is configured to:
acquire an image of the consumable in response to a user operation; and
identify the consumable from the image.
